# EUROPEAN PATENT APPLICATION

(11) **EP 4 759 628 A1**
(43) Date of publication of application: **17.06.2026**
(21) Application number: 24864513.7
(22) Date of filing: 04.09.2024
(51) Int. Cl.: B60N 2/28, B60R 16/02, H01R 13/40

(54) **ISOFIX CONNECTING ASSEMBLY AND SAFETY SEAT**

(30) Priority: 11.09.2023 CN 202311168170
(71) Applicant: Ningbo Baby First Baby Products Co., Ltd., Ningbo, Zhejiang 315412 (CN)
(72) Inventor: PAN, Xiaolu, Ningbo, Zhejiang 315412 (CN)
(74) Representative: Lorenz Seidler Gossel Part. mbB
(86) International application number: PCT/CN2024/116818
(87) International publication number: WO 2025/055793

(57) **Abstract**

The present invention provides an International Standards Organization FIX (ISOFIX) connection assembly and a safety seat including the same. The ISOFIX connection assembly comprises a housing, a fixing member detachably mounted to an end portion of the housing, and a connecting wire harness. A first end of the connecting wire harness is arranged in the housing, and a second end of the connecting wire harness extends to outside of the housing through the housing and the fixing member in sequence. When the fixing member is mounted to the end portion of the housing, the fixing member is configured to engage with the housing to clamp and fix the connecting wire harness. As such, wiring of the connecting wire harness is facilitated. In addition, during the use of the ISOFIX connection assembly and the safety seat, when a vehicle onto which the safety seat is installed bumps, the connecting wire harness will not shake to cause loosening of the connection between interfaces of the connecting wire harness and electrical components and affect the normal use of the ISOFIX connection assembly and the safety seat.

## Description

### TECHNICAL FIELD

The present invention relates to the technical field of child safety seats, and specifically to an International Standards Organization FIX (ISOFIX) connection assembly and a safety seat including the same.

### BACKGROUND

Child safety seats are a type of seats specially designed for children of different ages (or weights) and installed in vehicles to effectively improve children's safety during driving. At present, most child safety seats are installed on a seat of a vehicle by an ISOFIX connection assembly. The ISOFIX connection assembly mainly includes an ISOFIX connection joint. The reliability of connection between the connection joint and the seat of the vehicle is directly related to the safety of a child occupant in the vehicle. In order to improve the safety of a child occupant in the child safety seat, a detection system is provided in the ISOFIX connection joint of the child safety seat. The detection system can detect whether the ISOFIX connection joint is properly connected to a seat of a vehicle. If the ISOFIX connection joint is not properly connected to a seat of a vehicle, the detection system can send out an alarm through an external alarm device connected to the detection system to remind a user that the child safety seat is not installed in place.

The detection system includes a variety of sensors. Due to the small internal space of the ISOFIX connection assembly, the sensors have to be electrically connected to an external power supply device and the external alarm device by a connecting wire harness. However, an existing ISOFIX connection assembly on a safety seat cannot fix the connecting wire harness, and as the vehicle bumps during driving, the connecting wire harness will shake, loosening the connection between interfaces of the connecting wire harness and the sensors or external devices, affecting the normal use of the detection system, and making it impossible for the user to accurately know whether the child safety seat is installed in place.

### SUMMARY

An objective of the present invention is to provide an ISOFIX connection assembly to solve the problem that an existing ISOFIX connection assembly cannot fix a connecting wire harness.

Another objective of the present invention is to provide a safety seat.

To achieve the above objectives, the following technical solution is adopted in the present invention. An ISOFIX connection assembly includes:
a housing;
a fixing member detachably mounted to an end portion of the housing; and
a connecting wire harness, wherein a first end of the connecting wire harness is arranged in the housing, and a second end of the connecting wire harness extends to outside of the housing through the housing and the fixing member in sequence, where
when the fixing member is mounted to the end portion of the housing, the fixing member is configured to engage with the housing to provide clamping and fixation of the connecting wire harness; and when the fixing member is separated from the end portion of the housing, the fixing member is configured to separate from the housing to release the clamping and fixation of the connecting wire harness.

Preferably, the housing includes a connecting end portion and a fixing end portion opposite to the connecting end portion, the fixing member is detachably mounted to the fixing end portion, the fixing end portion is provided with a first fixing hole for the connecting wire harness to pass through, the fixing member is provided with a second fixing hole for the connecting wire harness to pass through, and when the fixing member is mounted to the fixing end portion, the first fixing hole is staggered from the second fixing hole, and the connecting wire harness is clamped and fixed by the first fixing hole and the second fixing hole.

Preferably, when the fixing member is mounted to the fixing end portion, a projection of the second fixing hole on a fixing end surface partially overlaps the first fixing hole.

Further preferably, the first fixing hole is provided at a center of the fixing end portion, or the second fixing hole is provided at a center of an end surface of the fixing member.

Further, the fixing end portion includes a first end surface and a positioning portion arranged on the first end surface, the positioning portion extends outward in a length direction of the housing, the fixing member includes a second end surface and a positioning cavity defined by the second end surface recessed inward, and when the fixing member is mounted to the fixing end portion, the first end surface is in contact with the second end surface, and the positioning portion is embedded in and engaged with the positioning cavity to restrict the fixing member from rotating about an axis of the housing.

Further, when the fixing member is mounted to the fixing end portion, a projection of an outer contour of the fixing member in the length direction of the housing coincides with an outer contour of the housing.

Further, the fixing member is provided with a connection portion, the housing is provided with a fitting portion, the connection portion is configured to engage with the fitting portion, and when an external force does not exceed a preset value, the fixing member is mounted to the housing by engagement of the connection portion with the fitting portion.

Further, the housing further includes a first housing and a second housing configured to be connected by inserting into each other, the fitting portions are provided on the first housing and the second housing respectively, and when the fixing member is sleeved over the first housing and the second housing, a plurality of the connection portions on the fixing member are respectively engaged with the fitting portions on the first housing and the second housing.

Further, the first housing and the second housing are connected by inserting into each other in a width direction of the ISOFIX connection assembly; the fixing member is mounted to the first housing and the second housing in a first direction, the first housing is mounted to the second housing in a second direction, and the first direction is perpendicular to the second direction.

Another aspect of the present invention provides a safety seat including the ISOFIX connection assembly described above.

Compared with the prior art, the present invention has the following advantages.

The ISOFIX connection assembly of the present invention includes a housing and a fixing member arranged on a fixing end portion of the housing. The fixing end portion of the housing is provided with a first fixing hole for a connecting wire harness to pass through. The fixing member is provided with a second fixing hole for the connecting wire harness to pass through. When the fixing member is mounted to the fixing end portion of the housing, the first fixing hole is staggered from the second fixing hole to clamp and fix the connecting wire harness, i.e., the first fixing hole and the second fixing hole can restrict the connecting wire harness from moving in the housing. The structure of the housing and the fixing member is relatively simple, and the connecting wire harness can be clamped and fixed without a cable tie or other additional parts. This not only facilitates wiring of the connecting wire harness, but also can prevent the connecting wire harness from moving in the housing to cause loosening of the connection between interfaces at two ends of the connecting wire harness and a detection unit and an external component, thereby ensuring that the connecting wire harness is reliably connected to the detection unit and the external component, enabling the detection unit to indicate to a user whether the safety seat is installed in place.

### BRIEF DESCRIPTION OF THE DRAWINGS

FIG. 1 is a schematic three-dimensional structural diagram of an ISOFIX connection assembly according to the present invention.
FIG. 2 is a schematic cross-sectional view of an ISOFIX connection assembly according to the present invention.
FIG. 3 is a schematic cross-sectional view of an ISOFIX connection assembly according to the present invention, where a fixing member is separated from a housing.
FIG. 4 is a partially enlarged view of part A in FIG. 2.

In the drawings, the reference numerals respectively represent: 100. ISOFIX connection assembly; 200. housing; 210. connecting end portion; 211. notch; 220. fixing end portion; 221. first end surface; 222. positioning portion; 223. first fixing hole; 230. fitting portion; 240. first housing; 250. second housing; 300. fixing member; 310. second end surface; 320. positioning cavity; 330. second fixing hole; 340. connection portion; 400. connecting wire harness; 500. connection buckle; 600. locking member; 700. detection unit; 710. magnet; 720. Hall sensor.

### DETAILED DESCRIPTION OF THE EMBODIMENTS

The present invention will be further described through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

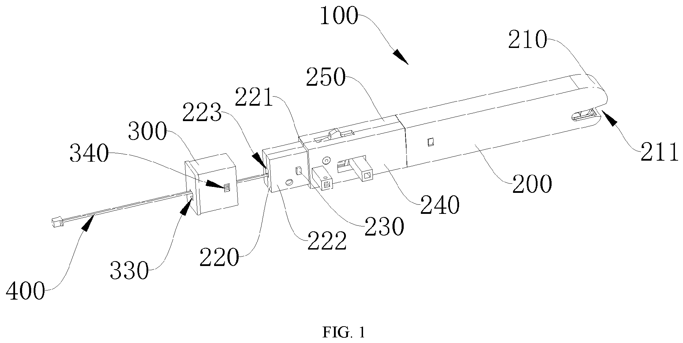

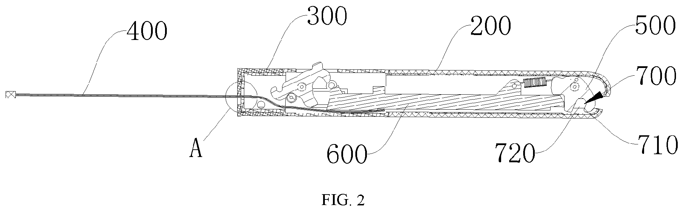

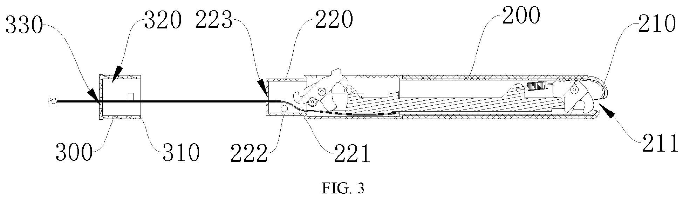

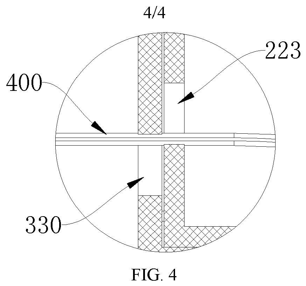

As shown in FIG. 1 to FIG. 4, an embodiment of the present invention provides an ISOFIX connection assembly 100. The ISOFIX connection assembly 100 is configured to be fixedly arranged at a bottom of a safety seat. The ISOFIX connection assembly 100 includes a housing 200, a fixing member 300, and a connecting wire harness 400. A first end of the connecting wire harness 400 is arranged in the housing 200 and is electrically connected to a detection unit 700 in the housing 200, and a second end of the connecting wire harness 400 extends to outside of the housing 200 through the housing 200 and the fixing member 300 in sequence and is electrically connected to an external component, so that the detection unit 700 is electrically connected to the external component by the connecting wire harness 400. The fixing member 300 is detachably mounted to an end portion of the housing 200. When the fixing member 300 is mounted to the end portion of the housing 200, the fixing member 300 is engaged with the housing 200 to clamp and fix the connecting wire harness 400. When the fixing member 300 is separated from the end portion of the housing 200, the fixing member 300 is separated from the housing 200 to release the clamping and fixation of the connecting wire harness 400. The clamping and fixation of the connecting wire harness 400 by the engagement of the fixing member 300 with the end portion of the housing 200 obviates the need for an additional part such as a cable tie or strap in the ISOFIX connection assembly 100, thereby simplifying the structure of the ISOFIX connection assembly 100.

Specifically, a connection buckle 500, a locking member 600, and a detection unit 700 configured to detect whether the ISOFIX connection assembly 100 is engaged in place are further arranged in the housing 200. The connection buckle 500 is rotatably arranged in the housing 200 and adjacent to a connecting end portion 210. The connecting end portion 210 is provided with a notch 211. An ISOFIX connector on a seat of a vehicle may be inserted into the housing 200 through the notch 211 to engage with the connection buckle 500, thus fixing the safety seat. The locking member 600 is configured to lock or unlock the connection buckle 500, so that the connection buckle 500 is movable between a locked position and an unlocked position. When the connection buckle 500 is at the locked position, the connection buckle 500 locks the ISOFIX connector engaged therewith. When the connection buckle 500 is at the unlocked position, the locking of the ISOFIX connector by the connection buckle 500 is released, allowing the ISOFIX connector to be separated from the connection buckle 500. The detection unit 700 is electrically connected to an external alarm device, an external power supply device, and other components by the connecting wire harness 400. The detection unit 700 is configured to output different electrical signals according to a change of a position of the connection buckle 500. The external alarm device is configured to send out a corresponding sound prompt or light prompt according to an electrical signal output by the detection unit 700 to remind a user that the safety seat is not installed in place.

The detection unit 700 includes a magnet 710 and a Hall sensor 720. The Hall sensor 720 is a magnetic field sensor made based on the Hall effect. The Hall sensor 720 is configured to generate a Hall voltage, which varies with the strength of the magnetic field. The stronger the magnetic field, the higher the Hall voltage. The weaker the magnetic field, the lower the Hall voltage.

Specifically, the magnet 710 is arranged to be adjacent to an end portion of the Hall sensor 720 when the connection buckle 500 is at the locked position and is configured to move along with the connection buckle 500. The Hall sensor 720 is a switch-type Hall sensor 720. A circuit in which the switch-type Hall sensor 720 is located outputs a state signal with a digit 0 in a normal state, and outputs a state signal with a digit 1 after the strength of the magnetic field reaches a certain level. When the connection buckle 500 is at the unlocked position, the magnet 710 is far away from the Hall sensor 720, and the strength of the magnetic field detected by the Hall sensor 720 is small and does not reach a critical value, so the Hall sensor 720 outputs a state signal with a digit 0. In a process of the connection buckle 500 moving from the unlocked position to the locked position, the magnet 710 moves toward the Hall sensor 720 along with the connection buckle 500, and the strength of the magnetic field detected by the Hall sensor 720 gradually increases to the critical value, so the Hall sensor 720 outputs a state signal with a digit 1. The state signal output by the Hall sensor 720 is received by the external component through the connecting wire harness 400. The external component detects the position of the connection buckle 500 according to the state signal output by the Hall sensor 720, and when detecting that the connection buckle 500 is not at the locked position, controls the alarm device to send out a sound prompt or a light prompt to remind the user that the safety seat is not installed in place. This helps the user to complete the installation of the safety seat more quickly, effectively, and safely.

Further, the housing 200 is in a cuboid shape, a cross section of the housing 200 is in a shape of a square, the housing 200 includes a connecting end portion 210 configured to connect to an ISOFIX connector on a seat of a vehicle and a fixing end portion 220 configured to connect to the fixing member 300, the connecting end portion 210 and the fixing end portion 220 are respectively arranged at two opposing ends of the housing 200, and the fixing member 300 is detachably mounted to the fixing end portion 220 of the housing 200. The fixing end portion 220 includes a first end surface 221 and a positioning portion 222 arranged on the first end surface 221. The positioning portion 222 extends outward in a length direction of the housing 200. The positioning portion 222 has a hollow interior and is in communication with an inner cavity of the housing 200. A size of an outer contour of the positioning portion 222 is smaller than a size of an outer contour of the housing 200. The fixing member 300 includes a second end surface 310 and a positioning cavity 320 defined by the second end surface 310 recessed inward. A shape of the positioning cavity 320 is the same as that of the positioning portion 222. When the fixing member 300 is mounted to the fixing end portion 220, the first end surface 221 is in contact with the second end surface 310, the positioning portion 222 is embedded in the positioning cavity 320, and a side wall of the positioning portion 222 is in contact with a side wall of the positioning cavity 320. As such, the fixing member 300 can be restricted from rotating about an axis of the housing 200 while the connection between the fixing member 300 and the fixing end portion 220 of the housing 200 is achieved. In some preferred embodiments, a cross section of the positioning portion 222 and a cross section of the positioning cavity 320 are in a shape of a square.

An outer contour of the fixing member 300 has the same shape as the outer contour of the housing 200. Therefore, when the fixing member 300 is mounted to the fixing end portion 220, a projection of the outer contour of the fixing member 300 in the length direction of the housing 200 coincides with the outer contour of the housing 200. In other words, when the fixing member 300 is mounted to the fixing end portion 220, an outer surface of the fixing member 300 is even with an outer surface of the housing 200, and the volume of the housing 200 is not increased.

It should be noted that the above description that the cross section of the housing 200 is in a shape of a square is merely a preferred embodiment, and the shape of the cross section of the housing 200 is not limited thereto, but may also be a rectangle, a hexagon, or other polygons. Similarly, the cross section of the positioning portion 222 and the cross section of the positioning cavity 320 are not limited to being in a shape of a square, but may also be in a shape of other polygons.

Further, a first fixing hole 223 for the connecting wire harness 400 to pass through is provided on an end surface of an outer side of the positioning portion 222, and a second fixing hole 330 for the connecting wire harness 400 to pass through is provided on an end surface of the fixing member 300, so that the connecting wire harness 400 can be electrically connected to the external component through the first fixing hole 223 and the second fixing hole 330 in sequence. A size of the first fixing hole 223 and a size of the second fixing hole 330 are larger than a size of the connecting wire harness 400, so that the connecting wire harness 400 can easily pass through the first fixing hole 223 and the second fixing hole 330 respectively. When the fixing member 300 is mounted to the fixing end portion 220 of the housing 200, the first fixing hole 223 is staggered from the second fixing hole 330, the connecting wire harness 400 is clamped and fixed by the first fixing hole 223 and the second fixing hole 330. If the connecting wire harness 400 is not properly limited and fixed, the connecting wire harness 400 will move in the housing 200 during use due to bumping of the vehicle, resulting in loosening and poor contact between interfaces at two ends of the connecting wire harness 400 and the detection unit 700 and the external component. As a result, the external component cannot receive a state signal sent by the detection unit 700, and therefore cannot indicate to the user whether the safety seat is installed in place.

When the fixing member 300 is mounted to the fixing end portion 220, a projection of the second fixing hole 330 on the end surface of the outer side of the positioning portion 222 partially overlaps the first fixing hole 223, and the connecting wire harness 400 that passes through the first fixing hole 223 and the second fixing hole 330 in sequence is in contact with the first fixing hole 223 and the second fixing hole 330 at the same time. An upper end surface of the connecting wire harness 400 is in contact with the second fixing hole 330, and a lower end surface of the connecting wire harness 400 is in contact with the first fixing hole 223. As such, the connecting wire harness 400 passes through the first fixing hole 223 and the second fixing hole 330 along a straight line and is clamped and fixed by the first fixing hole 223 and the second fixing hole 330. It should be noted that the size of the area of the overlapping portion between the first fixing hole 223 and the projection of the second fixing hole 330 on the end surface of the outer side of the positioning portion 222 is determined by the diameter of the connecting wire harness 400, and the area of the overlapping portion increases with the increase of the diameter of the connecting wire harness 400 and decreases with the decrease of the diameter of the connecting wire harness 400. As such, while being clamped and fixed by the first fixing hole 223 and the second fixing hole 330, the connecting wire harness 400 can pass through the first fixing hole 223 and the second fixing hole 330 along a straight line without bending.

In some preferred embodiments, the first fixing hole 223 is provided at a center of the fixing end portion 220, and the second fixing hole 330 is provided offset from a center of the end surface of the fixing member 300. As such, a projection of the second fixing hole 330 on the fixing end portion 220 can partially overlap the first fixing hole 223 regardless of an angle at which the fixing member 300 is mounted to the fixing end portion 220, so that the assembly process is simplified, and the fixing member 300 does not need to be mounted to the fixing end portion 220 at a specific angle, thereby improving the assembly efficiency. Alternatively, the second fixing hole 330 may be provided at the center of the end surface of the fixing member 300, and the first fixing hole 223 may be provided offset from the center of the fixing end portion 220.

In some other embodiments, the first fixing hole 223 and the second fixing hole 330 are staggered from each other, and do not overlap each other. In this case, the connecting wire harness 400 passes through the first fixing hole 223 and the second fixing hole 330 in a bent form, and is clamped and fixed by the first fixing hole 223 and the second fixing hole 330.

A connection portion 340 is provided on the inner wall of the positioning cavity 320 on the fixing member 300. A fitting portion 230 is provided on the housing 200 at a position corresponding to the positioning portion 222. The connection portion 340 is configured to engage with the fitting portion 230. When an external force applied to the fixing member 300 does not exceed a preset value, the fixing member 300 is mounted to the end portion of the housing 200 by engagement of the connection portion 340 with the fitting portion 230. Specifically, the fitting portion 230 on the housing 200 is an engagement block, and the connection portion 340 on the fixing member 300 is an engagement slot. When the fixing member 300 is mounted to the end portion of the housing 200, the engagement block is embedded in the engagement slot, so that the fixing member 300 is connected to the housing 200. The engagement block may be made of elastic plastic, so that a user can squeeze the engagement block to cause the engagement block to elastically deform and detach from the engagement slot, thereby removing the fixing member 300.

As shown in FIG. 1 to FIG. 4, the housing 200 further includes a first housing 240 and a second housing 250. The first housing 240 and the second housing 250 are both U-shaped. The first housing 240 and the second housing 250 are configured to be connected by inserting into each other, so that an accommodating cavity for accommodating the connection buckle 500, the detection unit 700, and the connecting wire harness 400 is formed between the first housing 240 and the second housing 250. The first housing 240 and the second housing 250 are connected by inserting into each other in a width direction of the ISOFIX connection assembly 100. A direction in which the first housing 240 is connected by inserting into the second housing 250 is perpendicular to a direction in which the fixing member 300 is inserted to the first housing 240 and the second housing 250. The fixing member 300 is connected to the first housing 240 and the second housing 250 at the same time. When the fixing member 300 is mounted to the end portion of the housing 200, the fixing member 300 is assembled to the first housing 240 and the second housing 250 at the same time, and a plurality of connection portions 340 on the fixing member 300 are respectively engaged with fitting portions 230 on the first housing 240 and the second housing 250, so that the fixing member 300 applies a force against the first housing 240 and the second housing 250 to prevent the first housing 240 and the second housing 250 from detaching from each other in the width direction of the ISOFIX connection assembly 100. In other words, in order to separate the first housing 240 from the second housing 250 in the width direction of the ISOFIX connection assembly 100, a user has to remove the fixing member 300 from the housing 200 first. The arrangement of the fixing member 300 on the fixing end portion 220 of the housing 200 can also improve the strength of connection between the first housing 240 and the second housing 250.

Based on the ISOFIX connection assembly 100 described above, another aspect of the present invention provides a safety seat including the ISOFIX connection assembly 100.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. An International Standards Organization FIX (ISOFIX) connection assembly, **characterized by** comprising:
a housing;
a fixing member detachably mounted to an end portion of the housing; and
a connecting wire harness, wherein a first end of the connecting wire harness is arranged in the housing, and a second end of the connecting wire harness extends to outside of the housing through the housing and the fixing member in sequence, wherein
when the fixing member is mounted to the end portion of the housing, the fixing member is configured to engage with the housing to provide clamping and fixation of the connecting wire harness; and when the fixing member is separated from the end portion of the housing, the fixing member is configured to separate from the housing to release the clamping and fixation of the connecting wire harness.

2. The ISOFIX connection assembly of claim 1, **characterized in that** the housing comprises a connecting end portion and a fixing end portion opposite to the connecting end portion, the fixing member is detachably mounted to the fixing end portion, the fixing end portion is provided with a first fixing hole for the connecting wire harness to pass through, the fixing member is provided with a second fixing hole for the connecting wire harness to pass through, and when the fixing member is mounted to the fixing end portion, the first fixing hole is staggered from the second fixing hole, and the connecting wire harness is clamped and fixed by the first fixing hole and the second fixing hole.

3. The ISOFIX connection assembly of claim 2, **characterized in that** when the fixing member is mounted to the fixing end portion, a projection of the second fixing hole on a fixing end surface partially overlaps the first fixing hole.

4. The ISOFIX connection assembly of claim 3, **characterized in that** the first fixing hole is provided at a center of the fixing end portion, or the second fixing hole is provided at a center of an end surface of the fixing member.

5. The ISOFIX connection assembly of claim 2, **characterized in that** the fixing end portion comprises a first end surface and a positioning portion arranged on the first end surface, the positioning portion extends outward in a length direction of the housing, the fixing member comprises a second end surface and a positioning cavity defined by the second end surface recessed inward, and when the fixing member is mounted to the fixing end portion, the first end surface is in contact with the second end surface, and the positioning portion is embedded in and engaged with the positioning cavity to restrict the fixing member from rotating about an axis of the housing.

6. The ISOFIX connection assembly of claim 5, **characterized in that** when the fixing member is mounted to the fixing end portion, a projection of an outer contour of the fixing member in the length direction of the housing coincides with an outer contour of the housing.

7. The ISOFIX connection assembly of any one of claims 1 to 6, **characterized in that** the fixing member is provided with a connection portion, the housing is provided with a fitting portion, the connection portion is configured to engage with the fitting portion, and when an external force does not exceed a preset value, the fixing member is mounted to the housing by engagement of the connection portion with the fitting portion.

8. The ISOFIX connection assembly of claim 7, **characterized in that** the housing further comprises a first housing and a second housing configured to be connected by inserting into each other, the fitting portions are provided on the first housing and the second housing respectively, and when the fixing member is sleeved over the first housing and the second housing, a plurality of the connection portions on the fixing member are respectively engaged with the fitting portions on the first housing and the second housing.

9. The ISOFIX connection assembly of claim 8, **characterized in that** the first housing and the second housing are connected by inserting into each other in a width direction of the ISOFIX connection assembly; the fixing member is mounted to the first housing and the second housing in a first direction, the first housing is mounted to the second housing in a second direction, and the first direction is perpendicular to the second direction.

10. A safety seat, **characterized by** comprising the ISOFIX connection assembly of any one of claims 1 to 9.
